(11) **EP 2 026 480 B1**

(12) **EUROPEAN PATENT SPECIFICATION**

(45) Date of publication and mention
of the grant of the patent:
**11.08.2010   Bulletin 2010/32**

(51) Int Cl.:
***H04B 17/00*** *(2006.01)*

(21) Application number: **07015890.2**

(22) Date of filing: **13.08.2007**

(54) **Method for measuring the trigger to frame time accuracy in measurement receivers**

Verfahren zur Messung des Auslöseimpulses zum Festlegen der Zeitgenauigkeit in Messempfängern

Procédé pour la mesure la précision temporelle du déclenchement pour le cadrage dans des récepteurs de mesure

(84) Designated Contracting States:
**DE GB**

(43) Date of publication of application:
**18.02.2009   Bulletin 2009/08**

(73) Proprietor: **Rohde & Schwarz GmbH & Co. KG**
**81671 München (DE)**

(72) Inventor: **Janot, Stephan**
**81827 München (DE)**

(74) Representative: **Körfer, Thomas et al**
**Mitscherlich & Partner**
**Patent- und Rechtsanwälte**
**Postfach 33 06 09**
**80066 München (DE)**

(56) References cited:
**DE-A1- 10 022 853**

- **"CDMA2000 Base station test with R&S equipment" 1 August 2003 (2003-08-01), ROHDE&SCHWARZ , XP002467047 * page 67 - page 68 ***

**Description**

The invention relates to measuring the trigger to frame time accuracy in measurement receivers, especially in CDMA measurement receivers.

In commonly used mobile communication systems modulated signals are transmitted. The modulation type and transmitted physical signal properties depend upon the modulation standard. In the specifications of various transmission standards the time constrains of logical information packages are given. Most of these timing specifications are related to the start of a logical frame, burst or data package. The transmitter which can be a base station or mobile user equipment transmits the signal. One important measurement task is to check the timing conditions at the transmitter antenna port. Previously this measurement was not obtained accurately. The specifications of the equipment were defined sufficiently broad, that the lack of timing measuring accuracy did not pose a problem. Though with increasing transmitting frequency of the employed communication standards tighter specifications grow necessary.

Estimation of a trigger time delay is known from DE 100 22 853 A1. This setup can, however not be used for a communication system.

Accordingly, the object of the invention is to provide a method for establishing the accuracy of a trigger to frame time measurement, which requires only a low technical complexity and can be performed using standard measurement equipment.

The object is solved by the features of claim 1. The dependent claims contain further developments.

The invention obtains the accuracy of the measurement of the trigger to frame time in measurement receivers receiving frame based communication signals. For this the following steps are performed: First the trigger to frame time accuracy of a vector signal generator is measured with an oscilloscope. The vector signal generator emits a pulse signal during this measurement. After this step the combined trigger to frame time accuracy of the measurement receiver and the vector signal generator is measured. The vector signal generator emits the identical pulse signal as in the first step. The measurement receiver is set to receive the pulse signal. As a third step the combined trigger to frame time accuracy of the measurement receiver and the vector signal generator is measured. The vector signal generator emits a frame based communication signal during this measurement. The measurement receiver is set to receive the pulse signal. As a fourth step the combined trigger to frame time accuracy of the measurement receiver and the vector signal generator is measured. During this measurement the vector signal generator emits the same frame based communication signal as in the previous step. The measurement receiver is set to receive a frame based communication signal. As a last step the trigger to frame time accuracy of the measurement receiver is calculated from the previous measurements. Beginning with the oscilloscope, which has a well known accuracy the trigger to frame time accuracy of the vector signal generator and the measurement receiver are obtained. By sequentially switching the signal type and the device being measured the known accuracy of the oscilloscope is used to determine the accuracy of the measurement receiver for the communication signal.

Preferably the pulse signal is a gaussian pulse signal, most preferred a gauss-pulse signal, which is invariant to Fourier transformation.

Favorably the frame based communication signal is a CDMA signal and the measurement receiver is a CDMA measurement receiver. Thereby the trigger to frame time accuracy of the CDMA measurement receiver can be obtained.

Favorably before measuring the trigger to frame time accuracy of the vector signal generator with the oscilloscope, the oscilloscope is calibrated with a precise signal source. The precise signal source is preferably a rubidium frequency standard. Thereby the accuracy of the oscilloscope is further increased. This increases the accuracy of the measurement of the trigger to frame time of the measurement receiver for a communication signal.

Favorably the oscilloscope comprises at least two independent input channels and the time delay and the frequency offset of the at least two channels of the oscilloscope is measured while calibrating the oscilloscope. After performing this measurement frequency offset errors and time delay errors between the oscilloscope channels are of no significance to the following measurements.

Favorably the steps for measuring the trigger to frame time accuracy of the CDMA measurement receiver are repeated for different trigger pulse shapes and levels. By doing so the influence of the trigger pulse shape and level is obtained, and can be considered in further measurements.

Favorably the oscilloscope and/or the vector signal generator and/or the measurement receiver transmit measurement results to a parameter calculation facility or a computer and the trigger to frame time accuracy is calculated by the parameter calculation facility or the computer. The oscilloscope and/or the vector signal generator and/or the measurement receiver preferably are controlled by a parameter calculation facility or a computer. Favorably the oscilloscope and/or the vector signal generator and/or the measurement receiver are connected by a bus. The handling complexity for the staff performing the measurement is thereby greatly reduced. The accuracy of the measurement is increased by preventing errors in reading the different meters.

An exemplary embodiment of the invention is now further explained with respect to the drawings, in which

Fig. 1      shows a customary measurement setup to measure the trigger to frame time;

Fig. 2      shows an overview of the measurement equipment used for determining the trigger to frame time accuracy of the measurement receiver;

Fig. 3      shows a measurement setup to measure the time delay and frequency offset of two oscilloscope channels;

Fig. 4      shows a measurement setup to measure the trigger to frame time accuracy of a vector signal generator using an oscilloscope;

Fig. 5      shows the spectral composition of a typical measurement signal used for the measurement shown in Fig. 4;

Fig. 6      shows a first measurement setup to measure the trigger to frame time accuracy of a measurement receiver using a vector signal generator;

Fig. 7a     shows the estimation of the maximal values of received measurement signals from the power of the received signals;

Fig. 7b     shows the estimation of the maximal values of received measurement signals from the magnitude of the received signals;

Fig. 8      shows a measurement setup for the second step to measure the trigger to frame time accuracy of a measurement receiver using a vector signal generator;

Fig. 9      shows a third measurement setup to measure the trigger to frame time accuracy of a measurement receiver using a vector signal generator, and

Fig. 10     shows a measurement setup to measure the trigger to frame time accuracy of a measurement receiver using a vector signal generator in dependence to the trigger impulse shape and level.

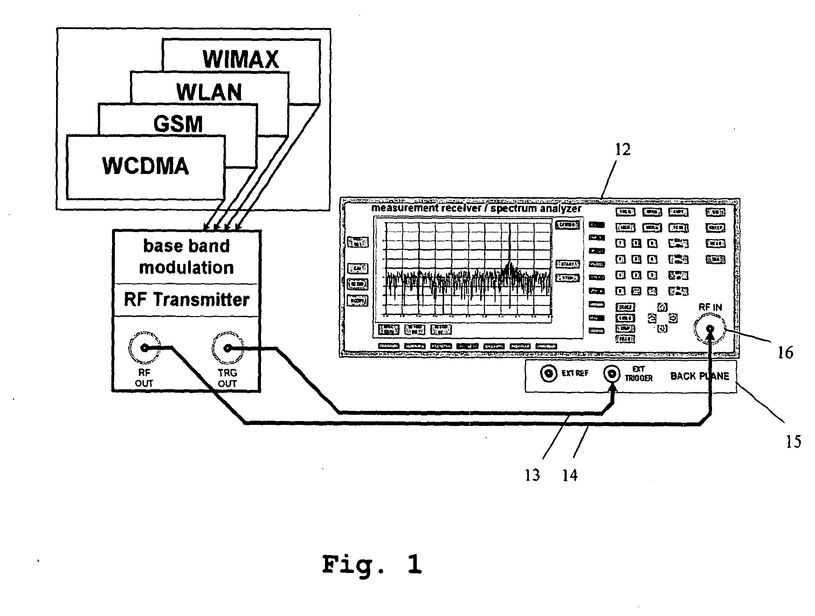

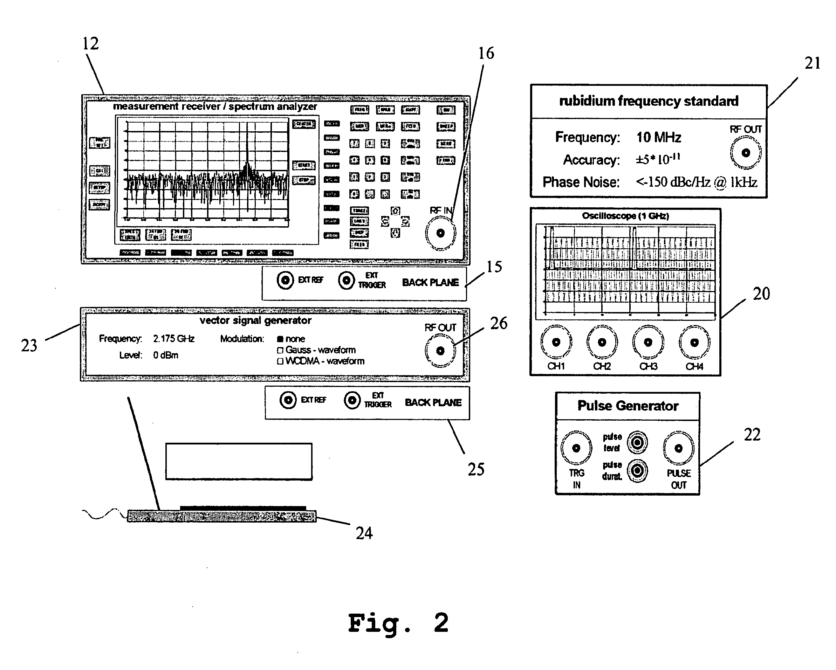

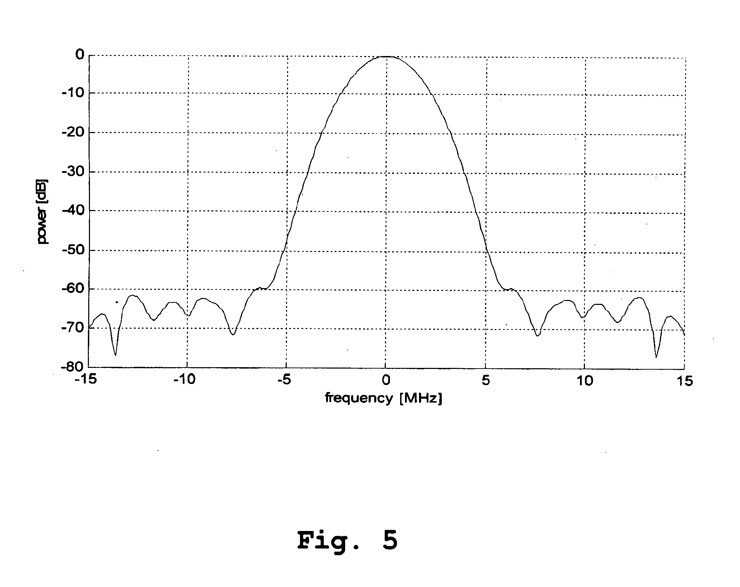

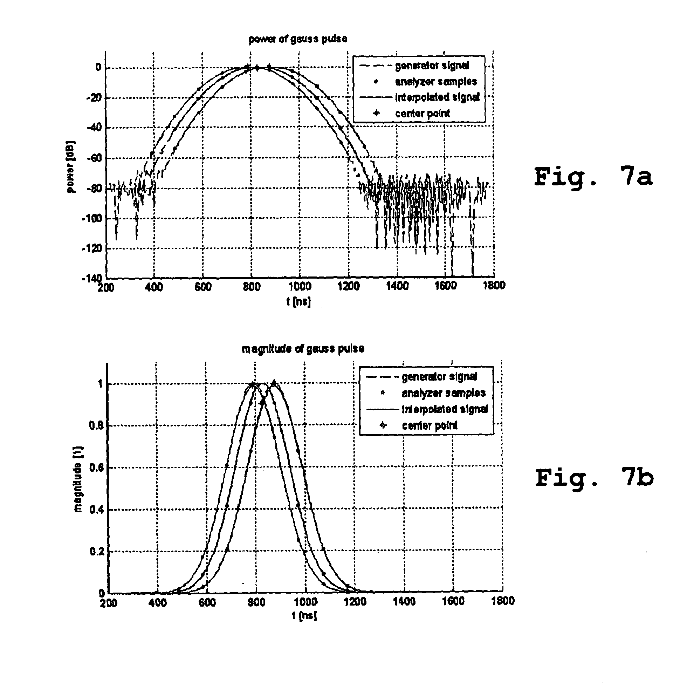

First we show the measurement setup for determining the trigger to frame time in Fig. 1. In a second step we demonstrate the procedure for measuring the trigger to frame time accuracy for the setup shown in Fig. 1 with regard to Fig. 2 to 4, 6 and 8 to 10. With Fig. 5 and 7 we show special properties of measurement signals obtained during performing the method. Similar entities and reference numbers in different figures have been partially omitted.

Fig. 1 shows a customary measurement setup to measure the trigger to frame time. To measure time behavior at the antenna two major prerequisites are required. The first one is to have a time reference given by a trigger or clock signal. The second one is to have a measurement receiver for RF signal evaluation and trigger time measurement with a sufficient time resolution and absolute accuracy. The first prerequisite can be fulfilled by the device under test itself. In most cases an external trigger port can deliver an accurate trigger signal. To meet the second condition the time accuracy of the used measurement receiver needs to be known.

The required time resolution and accuracy is normally inverse proportional to the Bandwidth of the signal. To evaluate time constrains of broad band signal a higher accuracy of the time resolution of the measurement device is required. It can be assumed that the time measurement accuracy should be in the range of one percent of the inverse bandwidth.

In case of a WCDMA signal the required accuracy is approximately $t_{res} = \dfrac{1\%}{F_{BW}} = \dfrac{1\%}{3.84MHz} = 2.6ns$ . The measurement receiver 12 now receives the RF signal through cable 14 and the RF IN connector 16 and the trigger signal through cable 13 and the measurement receiver backplane 15. After demodulation the time between the trigger pulse and the first logical frame is returned.

In Fig. 2 an overview of the measurement equipment used for determining the trigger to frame time accuracy of the measurement receiver is displayed. The measurement receiver 12 needs to be tested and is the device under test (DUT). Signals are connected to its RF IN connector 16 and to the measurement receiver backplane 15. Various test signals are generated by a vector signal generator 23. Signals are connected to the vector signal generator backplane 25. The generated signal is output at the RF OUT connector 26. The evaluation of the measurement results is supported by an external PC 24, which is able to get IQ data from the measurement receiver 12 and to control the vector signal generator 23. The time reference is given by a 1GHz oscilloscope 20 in this example.

The accuracy of the complete setup mainly depends on the inter channel skew accuracy of the used two input channels of the oscilloscope. In case of a 1 GHz oscilloscope, the inter channel time skew should be less than 10-50ps.

Further more this inaccuracy of the scope can be measured using a rubidium frequency standard 21 and considered, if the signal at the used oscilloscope input channels are swapped. Therefore, the accuracy of a 1GHz oscilloscope seems to be high enough for evaluation of measurement receiver 12 trigger to frame accuracy. The required resolution of trigger to frame measurement is below 5ns. Therefore the estimated accuracy of the oscilloscope of 50ps is sufficient for trigger to frame evaluation. For obtaining the dependency of the measurements on the trigger pulse shape and level a pulse generator 22 is used to generate different trigger pulses.

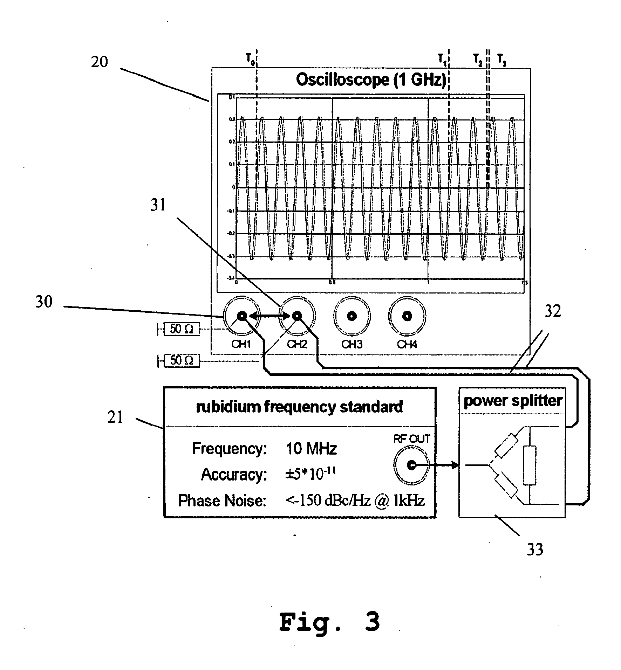

In the embodiment the calibration procedure is based on a rubidium frequency standard 21. This ensures a highly accurate time reference. The first check is to check the accuracy of the oscilloscope 20. A 10 MHz reference signal generated by the rubidium frequency standard 21 and split by a power splitter 33 is applied to two channels 30, 31 of the scope. The measurement setup and the corresponding sine waves are displayed in Fig. 3. From that measurement, the timescale correction value $\gamma$ of the oscilloscope can be obtained. The period time of a number N of sine wave periods are measured and related to the known period time given by the reference source. The inaccuracy of the time scale can by expressed as the ratio of the measured period time of the oscilloscope ($T_{scope} = T_1 - T_0$) and the known reference time $T_{ref}$, which is N times the period time of the reference signal:

$$T_{ref} = N \cdot \frac{1}{F_{ref}} = n \cdot 100ns$$

The ratio of scope time to reference time can expressed as

$$\gamma = \frac{T_{scope}}{T_{ref}} = \frac{T_{scope}}{N} F_{ref} = \frac{T_{scope}}{N} \cdot 10MHz$$

It may be necessary to measure a large number of periods to find any difference of reference time and oscilloscope time. If digital oscilloscopes are used, the sine curve need to be interpolated near the zeros, to get the accurate crossing time. If the sample data can be stored on a floppy disk or transferred by a GPIB connection, the interpolation should be done on an external PC. The determined time correction $\gamma$ should be considered for all following oscilloscope based time measurements.

A second inaccuracy of the oscilloscopes 20 is a possible time offset between the signals at both channels 30, 31. To compensate this time offset, the times of zero crossing at both sine waves are compared. The displayed time offset of both curves is influenced by two different delay elements. The first time delay is occurred by the external cabling 32 ($dT_{cab1}$ I $dT_{cab2}$). The second time delay is occurred by the signal delay of the two different channels inside the oscilloscope 30, 31 ($dT_{CH1}$ I $dT_{CH2}$). For further measurements the difference time delay between both input channels should be calculated ($dT_{chan\_offset} = dT_{CH2} - dT_{CH1}$). To solve this problem two measurements need to be forced, where the cabling 32 at the input channel 30, 31 is swapped between both measurements. The average of both measured time difference $dT_A$ and $dT_B$ at zero crossing gets the inter channel time offset $dT_{chan\_offset}$.

$$dT_A = \{dT_{cab2} + dT_{CH2}\} - \{dT_{cab1} + dT_{CH1}\} \quad | \quad (direct)$$

$$dT_B = \{dT_{cab1} + dT_{CH2}\} - \{dT_{cab2} + dT_{CH1}\} \quad | \quad (swapped)$$

where:

| | | |
|---|---|---|
| $dT_{chan\_offset}$ | [ns] | -difference of signal delay of channel 1 and channel 2. |
| $dT_A$ | [ns] | -time difference ($T_{channel2} - T_{channel1}$) of sine wave zero crossing with direct cabling (Measurement A) |
| $dT_B$ | [ns] | -time difference ($T_{channel2}$ - Tchannell) of sine wave zero crossing with swapped cabling (Measurement B) |

(continued)

| dT$_{CH1}$ | [ns] | -signal delay at channel 1 |
| dT$_{CH2}$ | [ns] | -signal delay at channel 2 |
| dT$_{cab1}$ | [ns] | -signal delay of cable 1 from power source to channel input |
| dT$_{cab2}$ | [ns] | -signal delay of cable 2 from power source to channel input |

If both equations are added the influence of the cable delay is eliminated.

$$dT_A + dT_B = \{dT_{cab2} + dT_{CH2}\} + \{dT_{cab1} + dT_{CH2}\} - \{dT_{cab1} + dT_{CH1}\} - \{dT_{cab2} + dT_{CH1}\}$$

$$dT_A + dT_B = 2 \cdot \{dT_{CH2} - dT_{CH1}\}$$

The inter channel time offset dT$_{chan\_offset}$ can be expressed as:

$$dT_{chan\_offset} = \{dT_{CH2} - dT_{CH1}\} = \frac{\{dT_A + dT_B\}}{2}$$

The determined time correction dT$_{chan\_offset}$ should be considered for all following oscilloscope based time measurements.

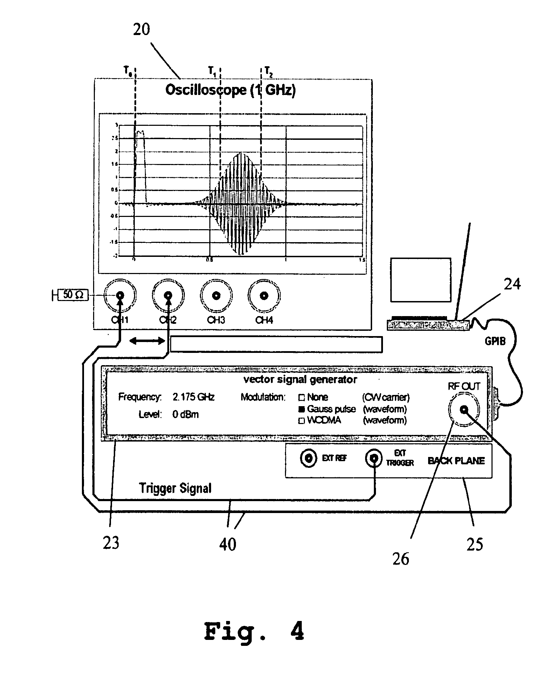

Fig. 4 shows a measurement setup to measure the trigger to frame time accuracy of a vector signal generator 23 using an oscilloscope 20. The vector signal generator 23 is configured to transmit a HF signal and Trigger signal. Both signals are measured at two channels of the 1 GHz oscilloscope 20. To eliminate inter-channel time delay between the input channels, the cables 40 are switched during the measurement. The base band shape of the transmitted signal is given by the connected PC 24. It is generated for example with MATLAB and is transmitted to the vector signal generator 23. In the preferred embodiment the base band shape is equal to a gauss pulse. It is more accurate to perform the measurement by using an x volts down marker. The trigger to pulse time can be calculated as follows:

$$T_{TrgToPulse}\left(GENERATOR_{GaussPulse}\right) = T_0 - \frac{T_1 + T_2}{2}$$

where:

| T$_{TrgToPulse}$ (GENERATOR$_{GaussPulse}$) | - Time from rising edge of the trigger pulse to the centre of the gauss pulse, in case of a gauss shaped base band signal at vector signal generator 23. |
| T0[us] | - time of the rising edge of the trigger pulse |
| T1[us] | - time of the left edge of the gauss pulse with half of maximum voltage level |
| T2[us] | - time of the right edge of the gauss pulse with half of maximum voltage level |

The standard deviation $(\sigma \approx (T_2 - T_1)/2)$ of the pulse is chosen to 4 to 5 times of the minimum sampling time of the measurement receiver. If this sampling rate is limited to 32 MHz, the standard deviation of the gauss pulse is calculated to:

$$\sigma = \frac{4.8}{F_s} = \frac{4.8}{32MHz} = 150ns \approx \frac{(T_2 - T_1)}{2}$$

Fig. 5 shows the spectral composition of a typical measurement signal used for the measurement shown in Fig. 4. The spectrum of the gauss pulse is also a gauss pulse, i.e. the gauss pulse is invariant to Fourier transformation. The bandwidth is approximately 2.5 MHz at 3dB below carrier and 4.6 MHz at 10dB below carrier in this example.

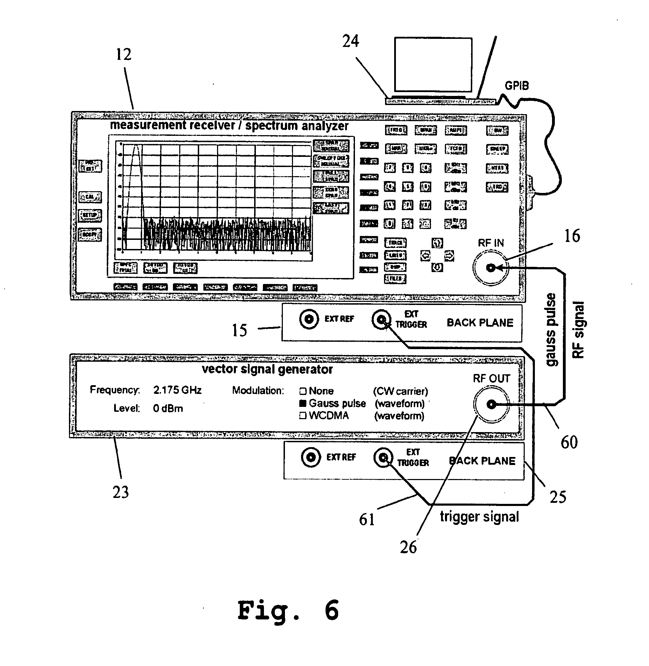

Fig. 6 shows a first measurement setup to measure the trigger to frame time accuracy of a measurement receiver 12 using a vector signal generator 23. The properties of the signals from the vector signal generator 23 especially the time duration between rising edge of trigger and the Gaussian pulse of HF signal are known from Fig. 4. The next task is to measure the same time difference between trigger and Gaussian pulse with the measurement receiver 12. The difference of both values gives a the internal trigger offset of the measurement receiver 12. To ensure same conditions for measurement at the oscilloscope 20 and the measurement receiver 12, vector signal generator 23 settings and cabling 60, 61 must not be changed between both measurements. The evaluation of the received HF signal must be based on captured IQ data. Due to internal timing offset correction, the start time of the displayed curve is slightly different from that of the IQ data. For IQ data capturing a PC 24 with GPIB or LAN connection to the measurement receiver 12 is required. The measurement receiver 12 needs to be configured in time domain measurement mode.

The following settings are recommended:

| | | |
|---|---|---|
| Reference Frequency: | | INTERNAL |
| External Trigger: | | ON |
| Frequency Centre: | | 2.175 GHz (equal to vector signal generator 23 frequency) |
| Frequency Span: | | ZERO SPAN |
| Resolution Bandwidth: | | 10MHz |
| Sweep Time: | | $10\mu s$ |
| Sampling Rate: | 81.6 MHz | (measurement receiver model 1) |
| | 32 MHz | (measurement receiver model 2) |
| | 16 MHz | (measurement receiver model 3) |
| IQ data capturing: | | ON |
| Single Sweep: | | ON |
| Force Single Sweep: | | repeat measurements 200 times to average results. |

All settings can be made automatically via the GPIB bus. After performing a measurement, the measurement results can be transferred to the measurement receiver 12 through a GPIB connection to the PC 24. It needs to be mentioned, that the displayed curve may be slightly different from the curve given by the IQ data.

CDMA analysis is made from pure IQ data samples. For that reason the following evaluations are also based on IQ data. There are two main affects which need to be considered for exact measurements.

Fig. 7a shows the estimation of the maximal values of received measurement signals from the power of the received signals, and Fig. 7b shows the estimation of the maximal values of received measurement signals from the magnitude of the received signals. The limited sample rate of the measurement receiver 12 requires an interpolation of the ideal Gauss pulse to determine the exact centre of the pulse. The continuous time signal transmitted from the vector signal generator 23 (dashed lines in Figures 7a and 7b) is sampled by the A/D converter of the measurement receiver 12 (dots in Figures 7a and 7b). To find an ideal curve (solid lines in Figures 7a and 7b), the samples need to be interpolated. The ideal centre of the Gaussian pulse can be calculated from estimated interpolation parameters. A detailed description of the interpolation of centre time is given in this chapter.

The trigger event occurs independently from the measurement receiver clock. If a trigger event is detected, the next A/D converter sample after the trigger event is marked as the first sample in the IQ memory. Because the IQ memory data represents a time discrete signal, the start of the signal may vary in each measurement receiver sweep. For this reason, the trigger to pulse measurement needs to be performed for a number of sweeps (for instance 200 sweeps) and afterwards all trigger to pulse results need to be averaged to get the accurate trigger to pulse time of the vector signal generator 23.

The transmitted signal $S_{HF}(t)$ of the vector signal generator 23 is a 2.175 GHz HF signal with a modulated Gaussian function at base band in this example.

$$s_{HF}(t) = \alpha \cdot \exp\left\{ -\frac{(t-t_0)^2}{\sigma^2} \right\} \cdot \exp\left( j[\omega t + \varphi] \right)$$

where:

$S_{HF}(t)]$    [V]    transmitted HF generator (vector signal generator 23) signal with gauss pulse base band modulation,

$\alpha$    [V]    magnitude of the base band signal,

$t$    [s]    continuous time,

$t_0$    [s]    time offset from signal start or trigger signal to centre of the gauss pulse of base band signal,

$\sigma$    [s]    standard deviation of the gauss pulse,

$\omega$    [1/s]    radian frequency of the HF carrier,

$\varphi$    [ ]    phase of the base band signal,

After down conversion, the logarithmic power of the base band signal is displayed.

$$P(t) = 10 \cdot \log_{10}\left[ |s_{HF}(t)|^2 \right] = 20 \cdot \log_{10}\left[ \alpha \cdot \exp\left\{ -\frac{(t-t_0)^2}{\sigma^2} \right\} \right]$$

where:
P(t) [dB] Received power of base band signal

$$P(t) = 20 \cdot \frac{\ln(\alpha)}{\ln(10)} + 20 \cdot \frac{\ln\left[ \exp\left\{ -\frac{(t-t_0)^2}{\sigma^2} \right\} \right]}{\ln(10)} = \frac{20}{\ln(10)} \cdot \ln(\alpha) - \frac{20}{\ln(10)} \cdot \frac{(t-t_0)^2}{\sigma^2}$$

As derived in the equation above, the power is equal to a parabola curve with its local maximum at signal to pulse time $t_0$.

$$P(t) = P_0 + \beta \cdot (t-t_0)^2 \quad | \quad P_0 = \frac{20}{\ln(10)} \cdot \ln(\alpha) \quad | \quad \beta = -\frac{20}{\ln(10)} \cdot \frac{1}{\sigma^2}$$

where:

$P_0$    [dB] maximum power of the base band signal

$\beta$    [dB/s$^2$] multiplier of parable function

As mentioned above the sample rate of the measurement receiver 12 is limited to a specific value. For this reason the data of the IQ memory represents a time discrete function. To find the trigger to pulse time $t_0$ a parabolic parameter estimation of the time discrete samples is required. Furthermore the samples ($z(nT_s)$) of the IQ memory are given as real and imaginary part of the base band signal:

$$z(nT_s) = real\{s(nT_s)\} + j \cdot imag\{s(nT_s)\} = z_r(nT_s) + j \cdot z_i(nT_s)$$

The first step is to calculate the time discrete logarithmic power from the values of IQ Memory.

$$P_z(nT_s) = \frac{10}{\ln(10)} \cdot \ln\left(|z(nT_s)|^2\right) = \frac{10}{\ln(10)} \cdot \ln\left\{z_r^2(nT_s) + z_i^2(nT_s)\right\}$$

where:

| | | |
|---|---|---|
| $P_z$ | [dB] | power of the complex symbol z of the IQ memory |
| $T_s$ | [s] | sample time of the measurement receiver 12 |
| n | [ ] | sample index at IQ memory |
| z | [ ] | complex symbol of the received base band signal |
| $z_r$ | [ ] | real part of complex symbol of the received base band signal |
| $z_i$ | [ ] | imaginary part of complex symbol of the received base band signal |

To estimate the trigger to pulse time a minimum mean square (LSM) algorithm can be used:

$$\int \left(P_z - \left\{P_0 + \beta \cdot (t - t_0)^2\right\}\right)dt \Rightarrow Minimum$$

considering time discrete samples and normalization of the sampling rate ( $t' = \dfrac{t}{T_s} = \dfrac{n \cdot T_s}{T_s} = n$;

$\beta' = \beta \cdot T_s^2$; $t_0' = \dfrac{t_0}{T_s}$ ) $t_0' = \dfrac{t_0}{T_s}$ ) the equation can be transformed to a sum expression.

$$\int \left(P_z - \left\{P_0 + \beta' \cdot (t' - t_0')^2\right\}\right)^2 dt' \Rightarrow \sum_n \left[P_z(n) - \left\{P_0 + \beta' \cdot (n - t_0')^2\right\}\right]^2 \Rightarrow Minimum$$

The resulting sum equation can be separated to its linear parameters.

$$\sum_n \left[P_z(n) - \left\{P_0 + \beta' \cdot (n - t_0')^2\right\}\right]^2 = \sum_n \left[P_z(n) - \left\{P_0 + \beta'n^2 - \beta'2nt_0' + \beta't_0'^2\right\}\right]^2$$

$$= \sum_n \left[-\beta'n^2 + \beta'2nt_0' + P_z(n) - \left\{P_0 + \beta't_0'^2\right\}\right]^2$$

After simplifying the equation the linear parameters $[\alpha_2, \alpha_1, \alpha_0]$ can be separated:

$$\sum_n \left[ a_2 n^2 + a_1 n + a_0 - \frac{\ln\left(|z_n|^2\right)}{2} \right]^2 \Rightarrow Minimum$$

$$a_0 = \ln(\alpha) - \left(\frac{T_s}{\sigma}\right)^2 \cdot t_0'^{\,2}$$

$$a_1 = 2 \cdot \left(\frac{T_s}{\sigma}\right)^2 \cdot t_0'$$

$$a_2 = -\left(\frac{T_s}{\sigma}\right)^2$$

The minimum of the equation is calculated by the partial derivation to each of the linear parameters. The resulting matrix equation is set to zero and needs be solved to get the standard deviation [$\sigma$] and the trigger to pulse time [$t_0$] of the applied Gaussian base band signal.

$$\vec{\nabla} \sum_n \left[ a_2 n^2 + a_1 n + a_0 - \frac{\ln\left(|z_n|^2\right)}{2} \right]^2 = \vec{0}$$

$$\vec{\nabla} \Rightarrow \begin{pmatrix} \dfrac{\partial}{\partial a_2} \\[2mm] \dfrac{\partial}{\partial a_1} \\[2mm] \dfrac{\partial}{\partial a_0} \end{pmatrix}$$

The solution of the partial derivation can be expressed as a set of linear equations.

$$\sum_n \left[ 2 \cdot \left\{ a_2 n^2 + a_1 n + a_0 - \frac{\ln\left(|z_n|^2\right)}{2} \right\} \cdot \vec{\nabla} \left( a_2 n^2 + a_1 n + a_0 - \frac{\ln\left(|z_n|^2\right)}{2} \right) \right] = \vec{0}$$

$$\sum_n \left[ 2 \cdot \left\{ a_2 n^2 + a_1 n + a_0 - \frac{\ln\left(|z_n|^2\right)}{2} \right\} \cdot \begin{pmatrix} n^2 \\ n \\ 1 \end{pmatrix} \right] = \vec{0}$$

Linear equation systems can be easily expressed and solved be matrix expressions and matrix inversion.

$$\begin{bmatrix} \sum_n n^4 & \sum_n n^3 & \sum_n n^2 \\ \sum_n n^3 & \sum_n n^2 & \sum_n n \\ \sum_n n^2 & \sum_n n & \sum_n 1 \end{bmatrix} \cdot \begin{pmatrix} a_2 \\ a_1 \\ a_0 \end{pmatrix} = \left\{ \begin{matrix} \sum_n \left( n^2 \cdot \dfrac{\ln\left(|z_n|^2\right)}{2} \right) \\ \sum_n \left( n \cdot \dfrac{\ln\left(|z_n|^2\right)}{2} \right) \\ \sum_n \left( 1 \cdot \dfrac{\ln\left(|z_n|^2\right)}{2} \right) \end{matrix} \right\}$$

The matrix can by further simplified by replacing the results of the sums.

$$m_0 = \sum_{n=0}^{N-1} n^0 = \sum_{n=0}^{N-1} 1 = N$$

$$m_1 = \sum_{n=0}^{N-1} n^1 = \frac{(N-1)\cdot N}{2}$$

$$m_2 = \sum_{n=0}^{N-1} n^2 = \frac{(N-1)\cdot N \cdot (2N-1)}{6}$$

$$m_3 = \sum_{n=0}^{N-1} n^3 = \frac{(N-1)^2 \cdot N^2}{4}$$

$$m_4 = \sum_{n=0}^{N-1} n^4 = \frac{(N-1)\cdot N \cdot (2N-1)\cdot (3N^2 - 3N - 1)}{30}$$

$$\overline{\overline{M}} = \begin{bmatrix} m_4 & m_3 & m_2 \\ m_3 & m_2 & m_1 \\ m_2 & m_1 & m_0 \end{bmatrix}; \quad \vec{a} = \begin{pmatrix} a_2 \\ a_1 \\ a_0 \end{pmatrix}; \quad \vec{y} = \left\{ \begin{matrix} \sum_n \left( n^2 \cdot \dfrac{\ln\left(|z_n|^2\right)}{2} \right) \\ \sum_n \left( n \cdot \dfrac{\ln\left(|z_n|^2\right)}{2} \right) \\ \sum_n \left( 1 \cdot \dfrac{\ln\left(|z_n|^2\right)}{2} \right) \end{matrix} \right\}$$

$$\vec{a} = \overline{\overline{M}}^{-1} \cdot \vec{y}$$

The inverse matrix $M^{-1}$ can be calculated to:

$$\overline{\overline{M^{-1}}} = \frac{1}{\det\left(\overline{\overline{M}}\right)} \cdot \begin{bmatrix} \left(m_2 m_0 - m_1^2\right) & \left(m_2 m_1 - m_3 m_0\right) & \left(m_3 m_1 - m_2^2\right) \\ \left(m_2 m_1 - m_3 m_0\right) & \left(m_4 m_0 - m_2^2\right) & \left(m_3 m_2 - m_4 m_1\right) \\ \left(m_3 m_1 - m_2^2\right) & \left(m_3 m_2 - m_4 m_1\right) & \left(m_4 m_2 - m_3^2\right) \end{bmatrix}$$

where:

$$\det\left(\overline{\overline{M}}\right) = \left(m_0 m_2 m_4 + 2 \cdot m_1 m_2 m_3\right) - \left(m_2^3 + m_1^2 m_4 + m_3^2 m_0\right)$$

If the number of used samples is constant, the inverse matrix $M^{-1}$ only needs to be calculated once. After getting the solution of vector $\vec{a}$, the standard deviation and time offset of the Gaussian pulse can be expressed:

$$\sigma = \sqrt{\frac{-1}{a_2}} \cdot T_s \ , \quad t_0 = \frac{-a_1}{2 \cdot a_2} \cdot T_s \ , \quad \alpha = \exp\left\{a_0 - \frac{a_1^2}{4 \cdot a_2}\right\}$$

The time resolution of the first signal sample related to the trigger pulse is limited to the sampling time $T_s$. To overcome this limitation, the obtained trigger to pulse times $t_0$ need to be averaged for preferably at least 200 sweeps.

$$T_{TrgToPulse}\left(Analyzer\right) = \frac{1}{K_{sweep}} \sum_{k=1}^{K_{sweep}} t_0(k) \quad | \quad K_{sweep} \approx 200$$

The expected reduction of the variance of the averaged trigger to pulse times is given by the factor

$$\frac{1}{\sqrt{K_{sweep}}} \cdot , \quad \text{where K is the number sweeps.}$$

If the trigger to pulse time of the measurement receiver 12 is known, the trigger delay of the measurement receiver 12 can be calculated from the known trigger to pulse time of the vector signal generator 23 and the averaged trigger to pulse time of the measurement receiver 12 signal.

$$T_{TrgDelay}\left(Analyzer\right) = T_{TrgToPulse}\left(Scope\right) - T_{TrgToPulse}\left(Analyzer\right) = T_{TrgToPulse}\left(Scope\right) - \frac{1}{K_{sweep}} \sum_{k=1}^{K_{sweep}} t_0(k)$$

where:

$T_{TrgDelay}\left(Analyzer\right)$      [ns]      trigger delay of the measurement receiver 12 in zero span measurement mode

(continued)

| | | |
|---|---|---|
| T$_{TrgToPulse}$ (Scope) | [ns] | measured trigger to pulse time from oscilloscope |
| T$_{TrgToPulse}$ (Analyzer) | [ns] | averaged trigger to pulse time from measurement receiver 12 |
| K$_{Sweep}$ | [ ] | Number of sweeps used for average process |

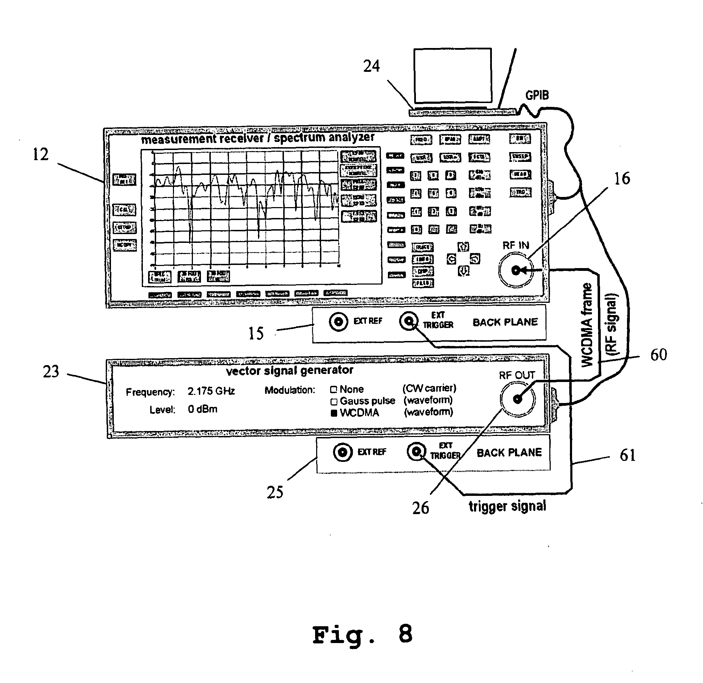

Fig. 8 shows the measurement setup for the second step to measure the trigger to frame time accuracy of a measurement receiver using a vector signal generator. If the trigger delay time of the measurement receiver is known, a CDMA signal can be applied to the measurement receiver 12. Now the trigger to frame time of the vector signal generator 23 can be measured.

It is important that the measurement receiver 12 settings and cabling 60, 61 is not changed compared to the measurement of Fig. 6. Only the vector signal generator 23 settings can be varied. The main difference to Fig. 6 is the received signal type. Instead of the gauss pulse a known CDMA signal is received. The CDMA signal is modulated by the help of an external PC 24. The waveform of that signal can be loaded to the vector signal generator 23. That ensures that the transmitted signal of the vector signal generator 23 is equal to the ideal generated signal except of additional Gaussian noise. To determine the trigger to frame time of the applied WCDMA signal, the received signal of the measurement receiver 12 is compared to the ideal signal waveform.

The comparison of the received waveform and the ideal waveform is realized in two steps. At the first coarse estimation, the received signal is correlated with the ideal signal. The time index of the correlation peak gives the coarse time delay of the received signal and the ideal signal. The accuracy of that time offset estimation depends on the sample rate F$_s$ of the measurement receiver and is approximately

$$\pm \frac{1}{2} \cdot \frac{1}{F_s} = \pm \frac{T_s}{2} \; .$$

$$CCF = \int s(t) - r(t - T_{coarse}) \, dt \Rightarrow CCF_m = \sum_n \{ s(nT_s) - r([n-m] \cdot T_s) \} = \sum_n \{ s_n - r_{n-m} \}$$

$$M_{max} = index \{ \max (|CCF_m|^2) \}$$

$$T_{coarse} = M_{max} \cdot T_s$$

where:

| | | |
|---|---|---|
| T$_{coarse}$ | [s] | coarse time offset of received signal to ideal signal |
| s(t) | [V] | ideal signal (continuous time) |
| r(t) | [V] | received signal (continuous time) |
| CCF$_m$ | [ ] | cross correlation of ideal signal and received signal (discrete time) |
| s$_n$ | [V] | ideal signal (discrete time) |
| r$_n$ | [V] | received signal (discrete time) |
| T$_s$ | [s] | sample time |
| M$_{max}$ | [ ] | offset index of the power maximum of the time discrete cross correlation function |

To increase the accuracy of the time comparison a minimum mean square solution is used:

$$\int\left\{10\cdot\log_{10}\left(|s(t)|^2\right)-10\cdot\log_{10}\left(\alpha\cdot\left|r(t-T_{fine}-T_{coarse})\right|^2\right)\right\}^2 dt \Rightarrow \min$$

$$\left\{\frac{10}{\ln(10)}\right\}^2 \int\left\{\ln\left(|s(t)|^2\right)-\left\langle\ln\left(\left|r(t-T_{fine}-T_{coarse})\right|^2\right)+\ln(\alpha)\right\rangle\right\}^2 dt \Rightarrow \min$$

where:

$T_{fine}$    [s]    fine estimated time offset of received signal to ideal signal

The equation above can be solved by using a linearization of the received signal and a derivation of the integral to the variation parameters $\alpha$ and $T_{fine}$. The total time offset between the ideal signal s(t) and the received signal r(t) is given as the sum of the coarse and the fine time estimation.

$$T_{offset} = T_{coarse} + T_{fine}$$

If the trigger to pulse time of the measurement receiver 12 is known, the trigger delay of the measurement receiver 12 can be calculated from the known trigger to pulse time of the vector signal generator 23 and the averaged trigger to pulse time of the measurement receiver 12 signal.

The accuracy of the determined time offset $T_{offset}$ of the received signal is limited to the sampling time $T_s$. To overcome this limitation, the obtained time offset values $T_{offset}$ need to be averaged for preferably at least 200 sweeps.

$$\overline{T_{offset}} = \frac{1}{K_{sweep}}\sum_{k=1}^{K_{sweep}}T_{offset}(k) \quad | \quad K_{sweep} \approx 200$$

The expected reduction of the variance of the averaged time offset ($\overline{T_{offset}}$) is given by the factor $1\!\!\left/\sqrt{K_{sweep}}\right.$ , where K is the number sweeps.

where:

$T_{coarse}$    [s]    coarse time offset of received signal to ideal signal
$T_{fine}$    [s]    fine estimated time offset of received signal to ideal signal
$T_{offset}$    [s]    time of received signal to ideal signal, which is equivalent to the total trigger delay of measurement receiver 12 and vector signal generator 23
$K_{Sweep}$    [ ]    number of sweeps to average the trigger result

The averaged value of the time offset $\overline{T_{offset}}$ of the received signal to the ideal signal includes the influence of the trigger delay of the vector signal generator 23 and the measurement receiver 12. To get only the trigger delay of the vector signal generator 23, the influence of the measurement receiver 12 needs to be separated. Therefore the measurement receiver 12 trigger delay is subtracted to calculate the trigger delay of the vector signal generator 23 in case of a CDMA modulation.

$$T_{TrgDelay}\left(Generator\right) = \overline{T_{offset}} - T_{TrgDelay}\left(Analyzer\right)$$

$$T_{TrgDelay}\left(Generator\right) = \frac{1}{K_{sweep}} \sum_{k=1}^{K_{sweep}} T_{offset}\left(k\right) - T_{TrgDelay}\left(Analyzer\right) \quad | \quad K_{sweep} \approx 200$$

where:

| | | |
|---|---|---|
| $T_{TrgDelay}$(Generator) | [s] | trigger delay time of the vector signal generator 23 |
| $T_{offset}$ | [s] | time of received signal to ideal signal, which is equivalent to the total trigger delay of measurement receiver 12 and vector signal generator 23 |
| $K_{Sweep}$ | [ ] | number of sweeps to average the trigger result |

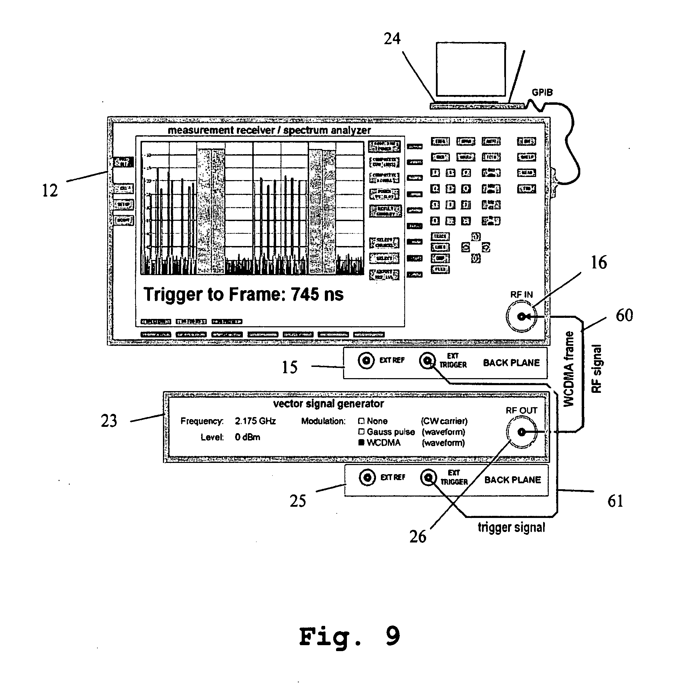

Fig. 9 shows a third measurement setup to measure the trigger to frame time accuracy of a measurement receiver 12 using a vector signal generator. In the fifth step all settings and cabling 60, 61 at vector signal generator 23 is kept. The applied CDMA signal is now demodulated and the trigger to frame result is displayed. The displayed value is expected to be the negative value of the vector signal generator 23 trigger delay

$$T_{TrgToFrame} = -T_{TrgDelay}\left(Generator\right)$$

The deviation of the displayed trigger from the expected value is the inaccuracy of the measurement receiver 12. It should be within a specified range. If it is not, the measurement receiver 12 needs to be recalibrated, and the displayed trigger to frame value needs to be corrected.

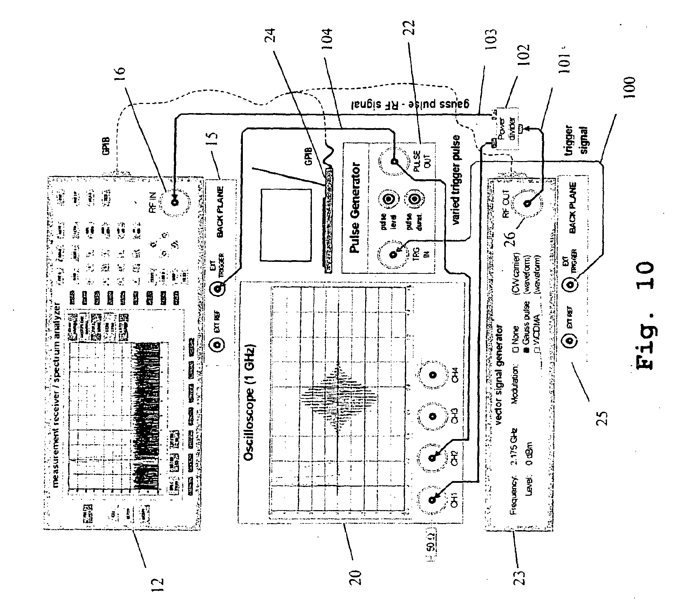

Fig. 10 shows a first measurement setup to measure the dependency of the trigger to frame time accuracy of a measurement receiver 12 using a vector signal generator 23 to the trigger impulse shape and level. In some cases, the internal trigger delay of the measurement receiver 12 does depend on the magnitude and shape of the trigger pulse. To determine the influence of the trigger pulse properties to the internal trigger delay, an external trigger pulse generator 22 for pulse modulation is used. In this measurement setup, the vector signal generator 23 delivers a trigger pulse to the pulse generator 22. The pulse generator 22 itself modulates the pulse. Normally pulse level and pulse duration can be adjusted. In special cases, also the rise and fall time of the pulse are varied. In dependency on these parameters, the internal trigger delay changes. Assuming a low pass characteristic at the trigger input at the back plane 15 of the measurement receiver 12, the internal trigger delay will increase if the trigger pulse level decreases. The influence of the variation parameters to the internal trigger delay is measured and reported as characteristic curves. Based on these characteristics, a correction of the internal trigger delay is made.

The invention is not limited to the examples and especially not to the CDMA signal type. The characteristics of the exemplary embodiments can be used in any combination. All features described and/or shown in the drawing can be combined without limitation.

## Claims

1. Method for measuring the trigger to frame time measuring accuracy of measurement receivers (12) receiving frame based communication signals and a trigger signal from a vector signal generator,
   the method comprising the following steps:

   - measuring the trigger to frame time of a vector signal generator (23) with an oscilloscope (20), with the vector signal generator (23) emitting a pulse signal;
   - measuring the combined trigger to frame time of the measurement receiver (12) and the vector signal generator (23) with the vector signal generator (23) emitting the same pulse signal as in the previous step and with the measurement receiver (12) being set to receive a pulse signal;
   - measuring the combined trigger to frame time of the measurement receiver (12) and the vector signal generator (23) with the vector signal generator (23) emitting a frame based communication signal and with the measurement receiver (12) being set to receive the pulse signal;
- measuring the combined trigger to frame time of the measurement receiver (12) and the vector signal generator (23) with the vector signal generator (23) emitting the same frame based communication signal as in the previous step and with the measurement receiver (12) being set to receive a frame based communication signal, and
- calculating the trigger to frame time accuracy of the measurement receiver (12) from the previous measurements.

2. Method according to claim 1,
   **characterized in that**
   the frame based communication signal is a CDMA signal, and that the measurement receiver (12) is a CDMA measurement receiver.

3. Method according to claim 1 or 2,
   **characterized in that**
   before measuring the trigger to frame time measuring accuracy of the vector signal generator (23) with the oscilloscope (20), the oscilloscope (20) is calibrated with a precise carrier frequency.

4. Method according to claim 3,
   **characterized in that**
   the precise carrier frequency is a rubidium frequency standard (21).

5. Method according to claim 3 or 4,
   **characterized in that**
   the oscilloscope (20) comprises at least two independent input channels, and
   that the time delay and the frequency offset of the at least two channels of the oscilloscope (20) is measured while calibrating the oscilloscope (20).

6. Method according to any of claims 1 to 5, **characterized in that**
   the steps for measuring the trigger to frame time measuring accuracy of the measurement receiver (12) are repeated for different trigger pulse shapes and levels.

7. Method according to any of claims 1 to 6, **characterized in that**
   the oscilloscope (20) and/or the vector signal generator (23) and/or the measurement receiver (12) transmit measurement results to a parameter calculation facility or a computer (24), and
   that the trigger to frame time measuring accuracy is calculated by the parameter calculation facility or the computer (24).

8. Method according to any of claims 1 to 7, **characterized in that**
   that the oscilloscope (20) and/or the vector signal generator (23) and/or the measurement receiver (12) are controlled by a parameter calculation facility or a computer (24).

9. Method according to any of claims 1 to 8, **characterized in that**
   the oscilloscope (20) and/or the vector signal generator (23) and/or the measurement receiver (12) are connected by a bus.

10. Method according to any of claims 1 to 9, **characterized in that**
    the pulse signal is a gaussian pulse signal, especially a gauss-pulse signal.

**Patentansprüche**

1. Verfahren zum Messen der Messgenauigkeit von Messempfängern (12), die rahmenbasierte Kommunikationssignale und ein Trigger- bzw. Auslösesignal von einem Vektor-Signalgenerator empfangen, bezüglich der Zeit von einem Trigger- bzw. Auslöseimpuls zu einem Rahmen,
   umfassend die folgenden Schritte:

   - Messen der Zeit von dem Auslöseimpuls zu dem Rahmen eines Vektor-Signalgenerators (23) mit einem Oszilloskop (20), wobei der Vektor-Signalgenerator (23) ein Impulssignal abgibt;
- Messen der kombinierten Zeit von dem Auslöseimpuls zu dem Rahmen des Messempfängers (12) und des Vektor-Signalgenerators (23), wobei der Vektor-Signalgenerator (23) dasselbe Impulssignal wie beim vorherigen Schritt abgibt und wobei der Messempfänger (12) eingestellt ist, um ein Impulssignal zu empfangen;
- Messen der kombinierten Zeit von dem Auslöseimpuls zu dem Rahmen des Messempfängers (12) und des Vektor-Signalgenerators (23), wobei der Vektor-Signalgenerator (23) ein rahmenbasiertes Kommunikationssignal abgibt und wobei der Messempfänger (12) eingestellt ist, um das Impulssignal zu empfangen;
- Messen der kombinierten Zeit von dem Auslöseimpuls zu dem Rahmen des Messempfängers (12) und des Vektor-Signalgenerators (23), wobei der Vektor-Signalgenerator (23) dasselbe rahmenbasierte Kommunikationssignal wie beim vorherigen Schritt abgibt und wobei der Messempfänger (12) eingestellt ist, um ein rahmenbasiertes Kommunikationssignal zu empfangen, und
- Berechnen der Genauigkeit des Messempfängers (12) bezüglich der Zeit von dem Auslöseimpuls zu dem Rahmen aus den vorherigen Messungen.

2. Verfahren nach Anspruch 1,
**dadurch gekennzeichnet,**
**dass** das rahmenbasierte Kommunikationssignal ein CDMA-Signal ist und dass der Messempfänger (12) ein CDMA-Messempfänger ist.

3. Verfahren nach Anspruch 1 oder 2,
**dadurch gekennzeichnet,**
**dass** vor dem Messen der Messgenauigkeit des Vektor-Signalgenerators (23) mit dem Oszilloskop (20) bezüglich der Zeit von dem Auslöseimpuls zu dem Rahmen das Oszilloskop (20) mit einer genauen Trägerfrequenz geeicht wird.

4. Verfahren nach Anspruch 3,
**dadurch gekennzeichnet,**
**dass** die genaue Trägerfrequenz ein Rubidium-Frequenzstandard (21) ist.

5. Verfahren nach Anspruch 3 oder 4,
**dadurch gekennzeichnet,**
**dass** das Oszilloskop (20) zumindest zwei unabhängige Eingangskanäle aufweist
und **dass** die Zeitverzögerung und der Frequenzversatz der zumindest zwei Kanäle des Oszilloskops (20) gemessen werden, während das Oszilloskop (20) geeicht wird.

6. Verfahren nach einem der Ansprüche 1 bis 5, **dadurch gekennzeichnet,**
**dass** die Schritte zum Messen der Messgenauigkeit des Messempfängers (12) bezüglich der Zeit von dem Auslöseimpuls zu dem Rahmen für unterschiedliche Trigger- bzw. Auslöseimpulsformen und -pegel wiederholt werden.

7. Verfahren nach einem der Ansprüche 1 bis 6, **dadurch gekennzeichnet,**
**dass** das Oszilloskop (20) und/oder der Vektor-Signalgenerator (23) und/oder der Messempfänger (12) Messergebnisse zu einer Parameter-Recheneinrichtung oder einem Computer (24) übertragen
und **dass** die Messgenauigkeit bezüglich der Zeit von dem Auslöseimpuls zu dem Rahmen durch die Parameter-Recheneinrichtung oder den Computer (24) berechnet wird.

8. Verfahren nach einem der Ansprüche 1 bis 7, **dadurch gekennzeichnet,**
**dass** das Oszilloskop (20) und/oder der Vektor-Signalgenerator (23) und/oder der Messempfänger (12) durch eine Parameter-Recheneinrichtung oder einen Computer (24) gesteuert werden.

9. Verfahren nach einem der Ansprüche 1 bis 8, **dadurch gekennzeichnet,**
**dass** das Oszilloskop (20) und/oder der Vektor-Signalgenerator (23) und/oder der Messempfänger (12) durch einen Bus bzw. eine Busleitungsanordnung verbunden sind.

10. Verfahren nach einem der Ansprüche 1 bis 9, **dadurch gekennzeichnet,**
**dass** das Impulssignal ein Gaußsches Impulssignal, insbesondere ein Gauß-Impulssignal ist.

**Revendications**

**1.** Procédé pour mesurer la précision temporelle de mesure du déclenchement pour le cadrage de récepteurs de mesure (12) recevant des signaux de communication basés sur le cadrage et un signal de déclenchement provenant d'un générateur de signal vectoriel,
le procédé comprenant les étapes suivantes :

- la mesure du temps du déclenchement pour le cadrage d'un générateur de signal vectoriel (23) à l'aide d'un oscilloscope (20), le générateur de signal vectoriel (23) émettant un signal d'impulsion ;
- la mesure du temps du déclenchement pour le cadrage combiné du récepteur de mesure (12) et du générateur de signal vectoriel (23), le générateur de signal vectoriel (23) émettant le même signal d'impulsion qu'à l'étape précédente et le récepteur de mesure (12) étant programmé pour recevoir un signal d'impulsion ;
- la mesure du temps du déclenchement pour le cadrage combiné du récepteur de mesure (12) et du générateur de signal vectoriel (23), le générateur de signal vectoriel (23) émettant un signal de communication basé sur le cadrage et le récepteur de mesure (12) étant programmé pour recevoir le signal d'impulsion ;
- la mesure du temps du déclenchement pour le cadrage combiné du récepteur de mesure (12) et du générateur de signal vectoriel (23), le générateur de signal vectoriel (23) émettant le même signal de communication basé sur le cadrage qu'à l'étape précédente, et le récepteur de mesure (12) étant programmé pour recevoir un signal de communication basé sur le cadrage, et
- le calcul de la précision temporelle du déclenchement pour le cadrage du récepteur de mesure (12) à partir des mesures précédentes.

**2.** Procédé selon la revendication 1,
**caractérisé en ce que**
le signal de communication basé sur le cadrage est un signal CDMA, et le récepteur de mesure (12) est un récepteur de mesure CDMA.

**3.** Procédé selon la revendication 1 ou 2,
**caractérisé en ce que**
avant la mesure de la précision de mesure temporelle du déclenchement pour le cadrage du générateur de signal vectoriel (23) à l'aide de l'oscilloscope (20), l'oscilloscope (20) est étalonné sur une fréquence porteuse précise.

**4.** Procédé selon la revendication 3,
**caractérisé en ce que**
la fréquence porteuse précise est une norme de fréquence au rubidium (21).

**5.** Procédé selon la revendication 3 ou 4,
**caractérisé en ce que**
l'oscilloscope (20) comprend au moins deux canaux d'entrée indépendants, et
la temporisation et le décalage de fréquence des au moins deux canaux de l'oscilloscope (20) sont mesurés pendant l'étalonnage de l'oscilloscope (20).

**6.** Procédé selon l'une quelconque des revendications 1 à 5, **caractérisé en ce que**
les étapes de mesure de la précision de mesure temporelle du déclenchement pour le cadrage du récepteur de mesure (12) sont répétées pour différents niveaux et formes d'impulsion de déclenchement.

**7.** Procédé selon l'une quelconque des revendications 1 à 6, **caractérisé en ce que**
l'oscilloscope (20) et/ou le générateur de signal vectoriel (23) et/ou le récepteur de mesure (12) transmettent des résultats de mesure à une installation de calcul de paramètre ou à un ordinateur (24), et
la précision de mesure temporelle du déclenchement pour le cadrage est calculée par l'installation de calcul de paramètre ou l'ordinateur (24).

**8.** Procédé selon l'une quelconque des revendications 1 à 7,
**caractérisé en ce que**
l'oscilloscope (20) et/ou le générateur de signal vectoriel (23) et/ou le récepteur de mesure (12) sont commandés par une installation de calcul de paramètre ou un ordinateur (24).

**9.** Procédé selon l'une quelconque des revendications 1 à 8, **caractérisé en ce que**

l'oscilloscope (20) et/ou le générateur de signal vectoriel (23) et/ou le récepteur de mesure (12) sont reliés par un bus.

10. Procédé selon l'une quelconque des revendications 1 à 9, **caractérisé en ce que**
    le signal d'impulsion est un signal d'impulsion gaussien, en particulier un signal d'impulsion de Gauss.

Fig. 1

EP 2 026 480 B1

**Fig. 2**

Oscilloscope (1 GHz)

$T_0$ $T_1$ $T_2$ $T_3$

CH1 CH2 CH3 CH4

50 Ω
50 Ω

20
31
30

32

power splitter

33

rubidium frequency standard

RF OUT

| Frequency: | 10 MHz |
| Accuracy: | $\pm 5 \cdot 10^{-11}$ |
| Phase Noise: | <-150 dBc/Hz @ 1kHz |

21

**Fig. 3**

Fig. 4

Fig. 5

Fig. 6

Fig. 7a

Fig. 7b

Fig. 8

Fig. 9

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• DE 10022853 A1